Europäisches Patentamt

European Patent Office

Office européen des brevets

(19)

(11) Publication number: **0 553 131 B1**

# EUROPEAN PATENT SPECIFICATION

(45) Date of publication of patent specification: **10.05.95**

(51) Int. Cl.⁶: **C04B 7/153**, C04B 7/19, C04B 14/38

(21) Application number: **91917511.7**

(22) Date of filing: **01.10.91**

(86) International application number: **PCT/SE91/00658**

(87) International publication number: **WO 92/06048 (16.04.92 92/09)**

(54) **METHOD FOR IMPROVING THE ACTIVATION OF LATENTLY HYDRAULIC BASIC BLAST-FURNACE SLAG IN THE PRODUCTION OF A BUILDING MATERIAL.**

(30) Priority: **05.10.90 SE 9003195**

(43) Date of publication of application:
**04.08.93 Bulletin 93/31**

(45) Publication of the grant of the patent:
**10.05.95 Bulletin 95/19**

(84) Designated Contracting States:
**CH DE DK ES FR GB IT LI NL SE**

(56) References cited:
**WO-A-87/02354**
**DE-A- 3 815 941**

(73) Proprietor: **KURZ, Fredrik, W., A.**
**Nysätravägen 12**
**S-181 61 Lidingö (SE)**

(72) Inventor: **KURZ, Fredrik, W., A.**
**Nysätravägen 12**
**S-181 61 Lidingö (SE)**

(74) Representative: **Westerlund, Christer et al**
**L.A. Groth & Co Patentbyra AB,**
**P.O. Box 6107**
**S-102 32 Stockholm (SE)**

**Description**

The present invention relates to a method of improving the activation of latently hydraulic granulated blast-furnace slag in the manufacture of building materials, and to a novel combination of activators for converting latently hydraulic slag to a hydraulic binder which will act directly when adding water. This new combination of activators eliminates the negative effect that results from aging of the slag.

It is well known that concrete is produced by adding water to a mixture of hydraulic binder and aggregate, for instance sand and/or gravel. When mixing concrete, it is imperative that the hydraulic binder will react chemically with the water so as to produce a concrete of satisfactory mechanical strength. Portland cement is the binder used predominantly at present in the building industry, the binding effect of which is achieved through a reaction between basic lye and silica. The process of hydration commences almost immediately after adding water, due to the alkali present in the material. Final binding of the concrete aggregate is effected by hydration of calcium silicates, which form a cement gel responsible for the mechanical strength properties of the concrete. However, during the process of hydration calcium hydroxide $Ca(OH)_2$ is generated in quantities greater than the amount that can be consumed by the silicate, $SiO_2$. It has been estimated that Portland cement will normally produce about 0.3 kg of calcium hydroxide for each kilogram of cement which reacts fully with water. This excess of $Ca(OH)_2$ was earlier considered to be advantageous to Portland cement because it imparted a high pH-value to the resultant concrete, thereby affording good protection against corrosion to the steel reinforcements incorporated in the concrete. $Ca(OH)_2$, however is an unstable and aggressive compound which causes many difficult problems, such as carbonation and resultant cracking of the concrete. The carbonation of concrete and the drawbacks associated therewith are discussed in an article by M. Maage in Nordisk Betong, No. 2 (1987). For instance, it has long been known that carbon dioxide in air will react with excess $Ca(OH)_2$ in concrete to form $CaCO_3$. This product has a volume which is different to the volume of the starting compound and the change in volume results in cracking of the concrete. Carbonation also leads to a lower pH-value, therewith reducing the anti-rust protection afforded by the concrete to the steel reinforcements.

Portland cement also contains a relatively large amount of lime, resulting in concrete that has a limited resistance to chemical attack. This is manifested, among other things, by the damage caused by salt water and road salt to bridges, off-shore-complexes and to different types of steel reinforced concrete. Another example of such damage is that caused to concrete roads and highways onto which road salt has been strewn during the cold winter months. A further drawback with the use of Portland cement is the heat developed during the initial hydration process in Portland cement, which can result in temperatures in excess of 50°C. As a result, heavy constructions with thicknesses above 0.4 m will crack and deform due to thermal stresses. Furthermore, concrete that has been produced with Portland cement is not refractory, but will disintegrate at temperatures above 500°C. The excess $Ca(OH)_2$ is namely decomposed to CaO and $H_2O$ at temperatures as low as about 325-400°C, causing cracks, increased porosity and disintegration.

Various attempts have been made to solve the aforementioned problems. One of the most successful of these is described in Applicant's older European Patent Application 86906023.6 (= EP-B-0272267). This application proposes the use of activated latently hydraulic blast-furnace slag as a concrete binder. This proposed method involves activating latently hydraulic slag with an activator which comprises a combination of acid and basic components, particularly magnesium oxide and phosphate, therewith providing a highly chemical-resistant concrete which is lean in lime and which will resist harmful carbonation and attack by salt, sulphates and chlorides. The resultant concrete also has a high compression and tensile strength, due to an increase in diffusion density and a decrease in permeability caused by the blast-furnace slag.

Blast-furnace slag has a composition similar to Portland cement, but contains only about half as much lime. Granulated slag is also only "latently" hydraulic, i.e. it is not a hydraulic binder, such as Portland cement, which binds directly when mixed with water. It is therefore necessary to activate latent hydraulic slag in order to initiate the hydration process. One reason why the slag will not bind directly when water is added, is because there is formed a silica-rich, impervious gel which encompasses the slag particles (grains) and prevents hydration. The activating agents thus have the dual purpose of first breaking up the gel and then reacting with the actual slag itself. As disclosed in Applicant's older European Patent Application 8690623.6, the subject matter of which forms part of the present patent application, various attempts have been made to obtain a hydraulic binder by activating latently hydraulic slag, since the 19th century. The most important of these known activating methods is described briefly in the foregoing, after a brief explanation of the term "granulated blast-furnace slag".

Blast-furnace slag is obtained in a red-hot, molten state as a rest product from iron and steel manufacturing processes. Granulated slag is the amorphous material that is formed when the still red-hot slag is rapidly cooled, either by spraying water thereon or by cooling the slag with a combination of cold

2

water and cold air. This treatment converts the slag to a vitreous and amorphous material. The slag is dewatered, dried and ground, normally to a greater fineness than, e.g., Portland cement, in order to achieve rapid hydration. Normally, the slag is ground to a fineness of 5000 Blaine ($cm^2$/g), as compared with Portland cement which normally has a fineness of about 3500 Blaine. Similar to Portland cement, the reaction rate of the slag increases with fineness.

Known slag activating methods:

I. Lime activation, which is the oldest activation method (Passow, 1892), involves mixing slag with Portland cement in a ratio of at least one part by weight Portland cement with each part by weight slag. The lime hydrate (Ca(OH)$_2$) formed during the hydration process functions as a slag activator. Because the hydration process is relatively late, the mechanical strength of the concrete develops slowly; short term strength is unsatisfactory. Furthermore, the excess of hydrated lime presents a risk of carbonation, leading to low chemical resistance.

II. Alkali activation (see H. Kühl); Zement Chemie, Berlin, 1951) involves adding alkali salts, such as NaOH or Na$_2$CO$_3$, in an amount of at least 7 percent by weight based on the amount of slag present, in order to disintegrate the silica-rich gel coating surrounding the slag particles (grains). 3.5 percent by weight NaOH is normally used together with 3.5 percent by weight Na$_2$CO$_3$. The high alkali concentration results in the occurrence of microcracks, which in turn results in poor chemical resistance and also in syneresis, which leads to water rejection and shrinkage (see T. Kutti, Alkali Activated slag Mortar, Chalmers Institute of Technology, Gothenburg, 1990). Sodium hydroxide also has an etching tendency and is harmful to the health when present in large quantities.

This method is limited to the manufacture of prefabricated concrete structures, since binding takes place much too quickly (within about 10 to 30 minutes) for the concrete to be cast at the building site.

III. As the term infers, sulphate activation is achieved with the aid of sulphates, in quantities of about 10 percent by weight based on the amount of slag present. This method can hardly be used today, due to the unsatisfactory short-term mechanical strength of the concrete produced, and due to the swelling risk.

IV. The most recent activating method involves activating slag with an activator that includes a combination of acid and basic components, particularly magnesium oxide and phosphate, in accordance with Applicant's EP-C 8690623.6. The combination of magnesium oxide and phosphate is known typically in connection with the manufacture of refractory ceramics. Normally, it is only possible to cause magnesium oxide and phosphate to react, by co-melting the compounds at high temperatures, about 1750 °C. Together with amorphous, granulated blast-furnace slag, however, magnesium oxide and phosphate can be caused to react at temperatures as low as room temperature. The reaction is enhanced, however, at higher temperatures, due to the occurrence of a ceramic bond, which results in improved fire resistance. This latter explains why the combination of slag-magnesium-phosphate will provide a refractory concrete capable of withstanding temperatures up to 1000 °C, in the absence of non-bonded hydrated lime and alkali. The aggregate, of course, should consist of a refractory material, i.e. of a material which will not expand at high temperatures.

Applicant's earlier method avoids the drawbacks associated with the older, aforedescribed activation methods I-III, and provides a high strength concrete having good chemical and mechanical resistance properties. It has recently been established, however, that the fineness of the granulated slag has a decisive significance on slag activation. In order to obtain high strength during the first twenty-four hours and an extremely high long-term strength, it is necessary to grind the granulated slag down to a fineness of roughly 7500 Blaine. Such high degrees of fineness require the application of an additional grinding stage, since commercially available granulated blast-furnace slag normally has a fineness of about 4500-5000 Blaine. This additional fine grinding stage down to a fineness of 7500 Blaine enlarges the specific surface area of the slag grains and therewith considerably enhances the mechanical strength of the concrete. The cost involved is relatively high, however.

Thus, there is a need for a method of improving the activation of amorphous granulated blast-furnace slag for the purpose of obtaining a directly binding hydraulic binder which is suitable for the manufacture of building materials.

Accordingly, there is proposed in accordance with the present invention a method for improving the activation of latently hydraulic slag, in which those activation methods known hitherto are greatly improved and with which those drawbacks associated with said methods are avoided, by a novel combination of activation agents. The novel slag activating method is set forth in Claims 1-10, while a method for the manufacture of building material is set forth in Claims 11 - 12.

It was established during the background work to the present invention that aging of amorphous granulated blast-furnace slag is caused partly by the effect of ambient air. This phenomenon is believed to be the reason why slags of mutually the same chemical composition sometimes produce completely

EP 0 553 131 B1

different results, i.e. the concrete produced obtains substantially different degrees of mechanical strength. The effect of the glassiness of the slag on the binding ability of the slag is the only reason given in the literature for the varying results achieved with slags of mutually the same chemical compositions. For this reason, the slag should therefore present a glassiness of at least 90%, preferably at least 98%.

When using finely-ground granulated blast-furnace slag which had been stored for about two years, it was established during activation tests carried out in accordance with the method proposed in the aforesaid European patent application that the concrete produced obtained only a fraction of its earlier measured strength, in other words only a fraction of the mechanical strength achieved with corresponding tests carried out two years earlier with the then fresh slag. The impairment of the ability of the slag to react begins after only a few months after the slag has been granulated and ground. One reason for this established reduction in reactivity is probably because the slag has aged due, among other things, to the effect of air and moisture. Aging polymerizes and densifies the gel skin which encompasses the individual slag grains. This results in reduced reactivity and renders the hydration process still more difficult, thereby requiring enhanced activation of the slag.

The method according to the present invention includes a supplementary addition of activating agent, which reacts chemically to disintegrate the sealing gel layer and to enlarge the specific reactive surface area of the slag grains without resulting in deleterious secondary effects. This supplementary, or complementary, addition of activating agent also renders unnecessary the additional fine-grinding stage described in method IV, which increases the reactive surface area of the slag grains, in order to obtain a concrete of very high strength. When practicing the inventive method, the reactive surface area of the slag grains is increased by a chemical roughening process.

The desired improvement in the activation of a latently hydraulic blast-furnace slag, mirrored in both improved short-term strength and improved long-term strength, is achieved by adding a limited amount of alkali and a limited amount of calcium, in the form of Portland cement and optionally calcium oxide, and also in the addition of an activator which includes magnesium oxide and phosphate.

By binder is meant in the following a slag and in combination with an activating agent which converts the slag to a hydraulic binder which will act directly when water is added.

The small amount of alkali considered appropriate is between 0.5-2 percent by weight, based on the total amount of binder, preferably about 1 percent by weight. The alkali used is, e.g., NaOH or KOH. This alkali quantity is insufficient to achieve the aforesaid alkali activation of slag (method II), but sufficient to disintegrate the gel skin which encompasses the slag grains, and thereby allow other activating substances access to the slag grains, such as lime in the form of Portland cement according to method I and/or the combination of acid and basic components, i.e. particularly magnesium oxide and phosphate, used in accordance with the method IV. The known alkali activation process, method II, can also be improved by lowering the alkali concentration, suitably to a level beneath 4 percent by weight, based on the amount of binder present, and by adding magnesium oxide, phosphate and a limited amount of Portland cement to the binding agents. The alkali concentration can be further reduced, according to the additions of the remaining activating agents and the quantities in which said agents are used. The amount of alkali added shall be so small that all of said alkali will be consumed essentially during the first day of hydration. Although a larger alkali addition in accordance with method II would result in greater strength, this greater strength would prevail only over a limited length of time, since the alkali excess would act on the slag grains and result in the formation of microcracks in the concrete, among other things.

According to the aforesaid method IV, the addition of alkali results in a given increase of the acid component in the activator, such as to achieve a chemical balance with the activators. Consequently, the amount of phosphate added should be increased by 1-2 percent by weight in comparison with the amount used in the method IV. When practicing this latter method, activation can be further improved when the phosphate added consists in a mixture of several phosphates, for instance sodium tripolyphospate and a very small amount of ammonium dihydrophosphate. This latter phosphate results in a very rapid bond and should only constitute at most 6 percent by weight of the total amount of phosphate present, or at most 0.6 percent by weight based on the amount of binder present. The amount of ammonium dihydrophosphate added can be increased when a rapid bond is required, within some few minutes, for instance when repairing cracks and similar damage to old concrete structures, or when manufacturing prefabricated concrete structures.

The initial hydration of blast-furnace slag is much slower than the hydration of Portland cement. It will be remembered that Portland cement does not react immediately when water is added, and will only react through the small amount of alkali present in the starting material, and then through the hydrated lime formed during the process of hydration. These components are not found in slag and consequently the addition of the small amount of alkali is essential for hydration of the slag. The alkali addition is restricted to

4

4 percent by weight, suitably beneath 2 percent by weight of the amount of binder present, thereby avoiding the harmful secondary effects mentioned with reference to alkali activation according to method II, such as a harmful alkali-silica-reaction. In this reaction, alkali releases silicon dioxide from minerals that contain amorphous silica. Consequently, for this reason such minerals should not be used as concrete aggregate. The high alkali concentration used in accordance with method II also results in leaching of the slag. The combination of magnesium oxide and phosphate according to method IV further prevents the occurrence of such possible secondary effects on the concrete produced, because the alkali concentration can be lowered in method II in combination with method IV.

In order to obtain a high long-term strength, i.e. a ultimate mechanical strength, there is needed an activator which is developed successively over the whole of the hydration period, i.e. an activator which is not quickly consumed. Such continuous activation takes place during lime-activation of slag with Portland cement, where $Ca(OH)_2$ is formed continuously over a period of about one month. In the case of known activation processes which use Portland cement, normally mixtures of at least 50 percent by weight Portland cement and at most 50 percent by weight slag, however, there is formed a disturbing excess of $Ca(OH)_2$ which results in carbonation, among other things. A smaller proportion of Portland cement in the mixture (<50 percent by weight) results, however, in unsatisfactory binding in method I. On the other hand, if the slag in method II or IV is admixed with about 15-30 percent by weight Portland cement, there is obtained an adapted, suitable quantity of lime which intensifies the hydration process, together with the remaining activators. The additions of Portland cement and alkali are instrumental in generating a certain amount of heat during the process of hydration, this heat having a positive influence on said process. The heat generated, however, is much lower than in Portland cement, thereby avoiding the occurrence of thermal cracks in the ultimate concrete structure. When practicing method IV, there is obtained by mixing at least 50 parts by weight, preferably 70-85 parts by weight, of slag with at most 50 parts by weight, preferably 30-15 parts by weight, Portland cement, a suitable quantity of $Ca(OH)_2$ which is delivered continuously during the whole of the hydration process and which is also completely consumed in the formation of a resistant $CaO-MgO-Al_2O_3$-silicate. The added amount of Portland cement will not therefore result in a hydrated lime surplus, a fact which has been verified by X-ray diffraction investigation. This investigation shows that even a small addition of 20 parts by weight Portland cement to 80 parts by weight slag will result in the development of non-bonded, and therefore deleterious $Ca(OH)_2$, whereas no such occurrence takes place in mortar which contains magnesium oxide and phosphate. However, the occurrence of microcracks is avoided by the continuous development of $Ca(OH)_2$, which has a self-healing effect on any microcracks that may form.

The total phosphate concentration of the activator is suitably beneath 20 percent by weight, preferably between 1-15 percent by weight, based on the amount of binder present. The total amount of magnesium oxide present, and optionally other earth metals is suitably between 1-10 percent by weight based on the amount of binder present.

Mixtures of Portland cement and slag in proportions of 50:50 to 60:40 according to method I are used in several countries in which slag is much less expensive than Portland cement. The use of slag cement is avoided in other countries, among them Sweden, due to the slow binding process, among other things. Another problem is the high degree of stiffness, low viscosity and therewith poorer workability of the concrete mass, which requires a higher water-cement-ratio (wcr). It has been found that a smaller addition of the activator according to method IV, comprising 3-4 percent by weight phosphate, 1.5-3 percent by weight magnesium oxide, 1-2 percent by weight lignosulphonate, 0.5-1 percent by weight sodium hydroxide, together with 10 percent by weight amorphous silicon dioxide powder, will also impart improvements to concrete that is based on Portland cement and slag in a ratio of 50:50 to 60:40; see Example 3 below. The phosphate concentration of the activator should not be too high, however, in view of the risk of apatite formation. It will be seen from the results presented in Example 3, however, that the proportion of 80 parts by weight slag to 20 parts by weight Portland cement produces a superior result with regard to mechanical strength, and particularly with regard to chemical resistance and fire resistance.

In order to improve the strength of the concrete still further, and above all the short-term strength, it is beneficial to add to the activators a small amount of calcium oxide ranging approximately from 0.3 to 3 percent by weight, preferably 0.5-2 percent by weight, based on the amount of binder present, since $Ca(OH)_2$ is not generated immediately in Portland cement. This small amount of lime also intensifies the reactiveness of the magnesium-oxide activator used in method IV, without causing the formation of apatite. The calcium oxide added to the system is consumed in the various reactions with magnesium oxide and silica. The lime addition is also necessary in order to activate any amorphous silica which may be included in the mixture, this amorphous silica greatly influencing the properties of the concrete, particularly its long-term strength and its imperviousness, in addition to the diffusion denseness obtained through the blast-furnace slag. Amorphous silicate powder consists of ultrafine, pure silicon dioxide in the form of silica dust or fly ash. This latter material has a coarse fine-graininess and purity which renders the material less reactive. Amorphous silica does not dissolve into the concrete, but has solely a positive influence on the strength and diffusion denseness of the concrete. With regard to the use of amorphous silica, reference is made to Applicant's older Swedish Patent Application 7312571-8.

According to the inventive method, the water-cement-ratio of the concrete mass can be lowered in relation to the Portland cement, i.e. it can be lowered from the Portland cement water-cement-ratio of 0.45 to a water-cement-ratio for the new concrete mass of approximately 0.30-0.35, without discernible negative influence on the flowability of the concrete. A low water-cement-ratio will result in high mechanical strength, and is thus desirable.

The present method of improving the activation of latently hydraulic blast-furnace slag can be used in combination with concrete additives well known to the person skilled within the cement and concrete field, such as surface tension-reducing agent, anti-agglomerating agents, such as plasticizers, e.g. lignosulphonate, melamine, naphthalene, formaldehyde, sodium gluconate, and the like. Furthermore, lightweight concrete or a refractory concrete capable of withstanding temperatures of up to 1000°C can be obtained by using different aggregates. The concrete can also be reinforced with different reinforcing materials, such as steel fibres, glass fibres, mineral fibres or plastic fibres in quantities appropriate for the use intended.

The aforesaid activators may advantageously be combined in different ways, for instance with the following additives, which are discussed exhaustively in Applicant's older EP-C 86906023.6: amorphous silica (c.f. also Applicant's older SE-C 7312571-8) surface tension-reducing agents; plasticizers; certain metal oxides which will influence the chemical resistance of the concrete, such as titanium oxide, zirconium oxide, zinc oxide, etc.; and gypsum.

Fluorides can also be added in an amount of approximately 1-5 percent by weight, based on the amount of binder present, so as to further improve the strength of the concrete.

It can be said in summary that the novel method of improving activation of latently hydraulic slag removes the negative influence of aging of the slag and also eliminates the harmful excess of free lime in lime activating processes, harmful high alkali concentrations in alkali-activating processes and renders it unnecessary to subject the slag to an extra fine-graining stage. Synergistic effects are obtained with combinations of known activation methods, because the negative effect on the activation/hydration process caused by aging of the slag is eliminated.

The invention will now be described in more detail with reference to a number of working Examples, although it will be understood that these Examples do not limit the scope of the invention.

Example 1

Activation of "fresh" and "old" finely-ground granulated blast-furnace slag with an activator consisting of phosphate and magnesium oxide.

Mixtures of mortar comprised of 100 parts by weight slag, 10 parts by weight sodiumtripolyphosphate (STPP), 7.5 parts by weight magnesium oxide, 326 parts by weight sand and 40 parts by weight water were moulded to form concrete prisms of 40 x 40 x 160 mm. Subsequent to stripping the forms or moulds, the prisms were stored in attemperated water, temperature 20±2°C until tested. Table 1 below illustrates the result of mechanical test strengths.

Table 1

| Type of Slag | Tensile Strength in Bending (MPa) | | | Compression Strength (MPa) | | |
|---|---|---|---|---|---|---|
| | 1 | 7 | 28 days | 1 | 7 | 28 days |
| Fresh slag (newly ground) fineness 7500 Blaine | 1.2 | 6.3 | 10.4 | 6.2 | 40.9 | 81.3 |
| 2 year-old Slag, fineness 7500 Blaine | 0.6 | 2.0 | 3.5 | 2.5 | 11.7 | 19.7 |
| Fresh slag (newly ground) fineness 5000 Blaine | 0.6 | 2.6 | 5.9 | 2.5 | 12.6 | 30.2 |
| 2 year-old Slag, fineness 5000 Blaine | 0.4 | 1.5 | 3.1 | 1.7 | 9.7 | 19.7 |

6

The results show that a finely-ground slag is required when activating according to method IV, and that slag aging of the slag necessitates enhanced activation.

Example 2

Activation of "old" finely-ground, granulated blast-furnace slag with Portland cement, magnesium oxide, phosphate and other additives.

A mortar mixture comprised of 80 parts by weight slag (2 year-old, fineness 5000 Blaine), 20 parts by weight Portland cement, 7.5 parts by weight MgO, 10 parts by weight STPP with an addition of 0.5 parts by weight $NH_4H_2PO_4$, 1 part by weight NaOH, 10 parts by weight amorphous $SiO_2$, 1 part by weight lignosulphonate, 1.4 parts by weight CaO, 326 parts by weight sand and 40 parts by weight water was formed into prisms (wcr = 0.34).
Table 2 shows the results obtained with mechanical strength tests carried out on said mixture compared with slag activated according to Example 1.

Table 2

| Type of Slag | Tensile Strength in Bending (MPa) | | | Compression Strength (MPa) | | |
|---|---|---|---|---|---|---|
| | 1 | 7 | 28 days | 1 | 7 | 28 days |
| 2 year-old 5000 Blaine | 2.3 | 8.1 | 12.4 | 12.5 | 59.1 | 77.3 |
| Same slag activated according to Example 1 | 0.4 | 1.5 | 3.1 | 1.7 | 9.7 | 19.7 |

The comparison shows that the novel combination reactivates "old" slag. The results also show that the novel, improved activating method renders it unnecessary to finely-grind the slag, as required with the method IV.

Example 3

Activation of granulated blast-furnace slag with solely Portland cement (lime activation) and alternatively with PC, NaOH, MgO, phosphate and other additives.

Mortar mixtures containing 364 parts by weight sand, 40 parts by weight water and different binders, including slag, Portland cement and optionally other activators were formed into prisms. Table 3 shows the binder compositions and the results of mechanical strength tests carried out.

## Table 3

| Binder (parts by weight) | Tensile Strength in Bending (MPa) | | | Compression Strength (MPa) | | |
|---|---|---|---|---|---|---|
| | 1 | 7 | 28 days | 1 | 7 | 28 days |
| 80 slag + 20 PC + 1 ligno-sulphonate | no meas.* | no meas.* | 2.4 | no meas.* | no meas.* | 6.45 |
| 70 slag + 30 PC + 1 ligno-sulphonate | 0.1 | 5.9 | 10.7 | 0.5 | 25.5 | 47.5 |
| 50 slag + 50 PC + 1 ligno-sulphonate | 0.6 | 6.6 | 8.8 | 7;2 | 39.1 | 61.4 |
| 80 slag + 20 PC+7.5 MgO + 1.4 CaO +1 NaOH +10 STPP + 0.5 $NH_4H_2PO_4$ +10 $SiO_2$ + 1 lignosulphonate | 2.3 | 9.1 | 12.4 | 12.5 | 59.1 | 77.3 |
| 70 slag + 30 PC+7.5 MgO + 1.4 CaO +1 NaOH +10 STPP | 2.3 | 6.7 | 12.8 | 8.4 | 44.1 | 65.6 |

| | | | | | | |
|---|---|---|---|---|---|---|
| + 0.5 $NH_4H_2PO_4$<br>+10 $SiO_2$<br>+1 lignosulphonate | | | | | | |
| 50 slag +<br>50 PC+ 2 MgO<br>+ 3 STPP<br>+ 0.15 $NH_4H_2PO_4$<br>+ 1 NaOH<br>10 $SiO_2$ + 1.5 lignosulphonate | 1.3 | 7.2 | 11.5 | 5.6 | 46.2 | 73.3 |

\* stands for results not measurable.

The results show that when activating slag with MgO and phosphate, a considerable improvement is obtained with a ratio of 80 parts by weight slag to 20 parts by weight Portland cement.

Example 4

Activation of slag with solely alkali (alkali activation) and alternatively with alkali, PC, MgO, phosphate and further additives.

Mortar mixtures containing 364 parts by weight sand, 40 parts by weight water and different binders including slag, alkali and optionally further slag activators were formed into prisms. Table 4 shows the binder compositions and the results of mechanical strength tests.

Table 4

| Binder (parts by weight) | Tensile Strength in Bending (MPa) | | | Compression Strength (MPa) | | |
|---|---|---|---|---|---|---|
| | 1 | 7 | 28 days | 1 | 7 | 28 days |
| 100 slag + 3.5 NaOH + 3.5 $Na_2CO_3$ (method II) | 3.7 | 8.5 | 10.7 | 10.5 | 23.9 | 30.9 |
| 80 slag + 20 PC + 2 NaOH + 2 $Na_2CO_3$ + 1.2 CaO + 3 MgO + 5 STPP + 0.5 $NH_4H_2PO_4$ + 10 $SiO_2$ + 1 lignosulphonate | 0.7 | 7.2 | 8.2 | 2.1 | 40.1 | 58.3 |

The results show that when activating with alkali, the excessively rapid binding that takes place on the first calendar day is delayed by the supplementary activators, while increasing the long-term strength of the concrete at the same time.

Example 5

Activation of slag with a combination of PC, MgO, phosphate, NaOH and fluoride.

A mortar mixture was prepared in accordance with Example 3. Table 5 shows the binder composition and the results obtained with mechanical strength tests.

Table 5

| Binder (parts by weight) | Tensile Strength in Bending (MPa) | | | Compression Strength (MPa) | | |
|---|---|---|---|---|---|---|
| | 1 | 7 | 28 days | 1 | 7 | 28 days |
| 80 slag $+$ 20 PC $+$ 7,5 MgO $+$ 1,4 CaO $+$ 1NaOH $+$ 10 $SiO_2$ $+$ 0.25 $NH_4H_2PO_4$ $+$ 1 lignosulphonate $+$ 3 fluoride | 2.5 | 7.0 | 9.6 | 8.8 | 68.0 | 85.6 |

The results show that the addition of fluorides further improves the mechanical properties of the concrete.

Example 6

X-ray diffraction investigation of binder hydration.

A mortar was produced containing as binder granulated amorphous blast-furnace slag and Portland cement, with and without magnesium/oxide and phosphate activation. Table 6, below, shows the binder composition and the result of the X-ray fraction investigation.

The results show that mixtures of slag and Portland cement (Nos. 1-4) release a large excess of non-bound, and therefore decomposable, aggressive $Ca(OH)_2$. No $Ca(OH)_2$ was seen to form when adding an activator containing magnesium oxide and phosphate, in other words the calcium hydroxide harmful to the concrete had been consumed completely during the hydration process.

Table 6

| Binder No. | Composition (parts/weight) | | | | | X-ray diffraction after hydration 7 and 28 calendar days resp. |
| --- | --- | --- | --- | --- | --- | --- |
| | slag | PC | MgO | phosphate | water | |
| 1 | 80 | 20 | – | – | 34 | Ca(OH)$_2$ discerned |
| 2 | 70 | 30 | – | – | 34 | Ca(OH)$_2$ discerned |
| 3 | 50 | 50 | – | – | 34 | Ca(OH)$_2$ discerned |
| 4 | – | 100 | – | – | 34 | Ca(OH)$_2$ discerned |
| *) 5 | 80 | 20 | 7,5 | 10 | 34 | Ca(OH)$_2$ not discerned |
| *) 6 | 70 | 30 | 7,5 | 10 | 34 | Ca(OH)$_2$ not discerned |
| *) 7 | 50 | 50 | 7,5 | 10 | 34 | Ca(OH)$_2$ not discerned |

*) According to the Invention

## Claims

1. A method of converting latent hydraulic ground granulated amorphous blast-furnace slag to a hydraulic binder which will act directly when water is added, by improved activation of a slag activated with an activator comprising magnesium oxide and phosphate,
**characterized** by mixing the slag and the activator with a combination of additional activators which include alkali and calcium, wherein alkali is present in an amount of less than 4 percent by weight, based on the amount of binder present, and calcium is present in the form of a Portland cement and optionally calcium oxide, wherein the Portland cement is present in an amount of 15-60 percent by weight based on the amount of binder present.

2. A method according to Claim 1, **characterized** in that alkali is used in an amount of between 0.5-2 percent by weight, based on the amount of binder present.

3. A method according to any one of Claims 1-2, **characterized** in that magnesium oxide and optionally other oxides, such as titanium oxide and zirconium oxide is/are present in an amount of from 1-10 percent by weight, based on the amount of binder present, and in that phosphates are present in an amount of between 1-20 percent by weight, based on the amount of binder present.

4. A method according to any one of Claims 1-3, **characterized** by adding calcium oxide in an amount of 0.3-3 percent by weight, based on the amount of binder present.

5. A method according to any one of Claims 1-4, **characterized** by adding Portland cement in an amount of from 15-30 percent by weight, based on the amount of binder present.

6. A method according to any one of Claims 1-4, **characterized** by adding Portland cement in an amount of approximately 20 percent by weight, based on the amount of binder present.

7. A method according to any one of Claims 1-6, **characterized** by adding amorphous silica powder to the binders in an amount of 4-20 percent by weight, based on the amount of binder present.

8. A method according to any one of Claims 1-7, **characterized** in that the slag has been ground to a fineness of approximately 5000 Blaine, or more.

9. A method according to any one of Claims 1-8, **characterized** by adding to the binder a surface tension-reducing agent and/or a plasticizer agent and/or gypsum.

10. A method according to any one of Claims 1-9, **characterized** in that the slag has been ground to a fineness of approximately 7500 Blaine.

11. A method for manufacturing building materials by converting a latently hydraulical ground granulated amorphous blast-furnace slag to a directly-acting hydraulic binder by improving activation in accordance with any one of Claims 1-10, **characterized** by mixing the slag, the activator and all activating agents with water and aggregate, such as sand and/or gravel, in a conventional fashion, thereby to form a concrete of high mechanical strength, high chemical resistance and a fire resistance of up to 1000 °C.

12. A method according to Claim 11, **characterized** by also adding steel fibre, glass fibre, mineral fibre or plastic fibre or pore-forming material or lightweight aggregate material to the concrete mixture.

**Patentansprüche**

1. Verfahren zur Umwandlung latent hydraulischer, durch Mahlen granulierter amorpher Hochofenschlacke zu einem bei Wasserzusatz direkt wirkenden hydraulischen Binder durch verbesserte Aktivierung einer Schlacke, die mit einem Aktivator aktiviert wird, der Magnesiumoxyd und Phosphat enthält, gekennzeichnet durch Mischung der Schlacke und des Aktivators mit einer Kombination von zusätzlichen Aktivatoren, welche Alkali und Kalzium enthalten, wobei Alkali basierend auf der Menge des vorhandenden Binden in einer Menge von weniger als 4 Gewichtsprozent vorhanden ist, und Kalzium in Form eines Portlandzements und wahlweise von Kalziumoxyd vorbanden ist, wobei der Portlandzement basierend auf der Menge des vorhandenen Binders in einer Menge von 15 bis 60 Gewichtsprozent vorhanden ist.

EP 0 553 131 B1

**2.** Verfahren nach Patentanspruch 1, dadurch gekennzeichnet, daß Alkali in einer Menge zwischen 0,5 bis 2 Gewichtsprozent verwendet wird, basierend auf der Menge des vorhandenen Binders.

**3.** Verfahren nach einem der Patentansprüche 1 oder 2, dadurch gekennzeichnet, daß Magnesiumoxyd und wahlweise andere Oxyde, wie Titanoxyd und Zirkoniumoxyd basierend auf der Menge an vorhandenem Binder in einer Menge von 1 bis 10 Gewichtsprozent anwesend ist/sind, und daß Phosphate in einer Menge zwischen 1 bis 20 Gewichtsprozent anwesend sind, basierend auf der Menge an vorhandenem Binder.

**4.** Verfahren nach einem der Patentansprüche 1 bis 3, gekennzeichnet durch den Zusatz von Kalziumoxyd in einer Menge von 0,3 bis 3 Gewichtsprozent, basierend auf der Menge an vorhandenem Binder.

**5.** Verfahren nach einem der Patentansprüche 1 bis 4, gekennzeichnet durch den Zusatz von Portlandzement in einer Menge von 15 bis 30 Gewichtsprozent, basierend auf der Menge an vorhandenem Binder.

**6.** Verfahren nach einem der Patentansprüche 1 bis 4, gekennzeichnet durch den Zusatz von Portlandzement in einer Menge von ungefähr 20 Gewichtsprozent, basierend auf der Menge an vorhandenem Binder.

**7.** Verfahren nach einem der Patentansprüche 1 bis 6; gekennzeichnet durch den Zusatz von amorphem Kieselsäurepulver zum Binder in einer Menge Von 4 bis 20 Gewichtsprozent, basierend auf der Menge an vorhandenem Binder.

**8.** Verfahren nach einem der Patentansprüche 1 bis 7, dadurch gekennzeichnet, daß die Schlacke auf eine Feinheit von etwa 5000 Blaine oder mehr gemahlen worden ist.

**9.** Verfahren nach einem der Patentansprüche 1 bis 8 gekennzeichnet durch den Zusatz eines die Oberflächenspannung reduzierenden Agens und/oder eines plastizierenden Agens und/oder von Gips.

**10.** Verfahren nach einem der Patentansprüche 1 bis 9, dadurch gekennzeichnet, daß die Schlacke auf eine Feinheit von etwa 7500 Blaine gemahlen worden ist.

**11.** Verfahren zur Herstellung von Baumaterialien durch Umwandlung einer latent hydraulischen, durch Mahlen granulierten amorphen Hochofenschlacke zu einem direkt-wirkenden hydraulischen Binder durch verbesserte Aktivierung gemäß einem der Patentansprüche 1 bis 10, gekennzeichnet durch die Vermischung der Schlacke, des Aktivators sowie aller Aktivierzusätze mit Wasser und Zuschlagstoffen, wie Sand und/oder Kies, in herkömmlicher Weise, um dadurch einen Beton von hoher mechanischer Festigkeit, hoher chemischer Beständigkeit sowie einer Feuerbeständigkeit von bis zu 1000° C zu bilden.

**12.** Verfahren nach Patentanspruch 11, gekennzeichnet durch den weiteren Zusatz von Stahlfasern, Glasfasern, Mineralfasern oder Kunststoffasern oder porenbildendem Material oder leichtgewichtigen Zuschlagstoffen zum Betongemisch.

**Revendications**

**1.** Procédé de conversion de laitier de haut-fourneau amorphe broyé, sous forme de granulés, à hydraulicité latente, en liant hydraulique qui agira directement lorsque de l'eau sera ajoutée, par activation améliorée d'un laitier activé avec un activateur comprenant de l'oxyde de magnésium et du phosphate, caractérisé par le fait de mélanger le laitier et l'activateur avec une combinaison d'activateurs supplémentaires comprenant de l'alcali et du calcium, l'alcali étant présent selon une quantité inférieure à 4 pour cent en poids, calculée sur la base de la quantité de liant présente, et le calcium étant présent sous la forme d'un ciment portland et, le cas échéant, d'oxyde de calcium, le ciment portland étant présent selon une quantité de 15-60 pour cent en poids, calculée sur la base de la quantité de liant présente.

13

2. Procédé selon la revendication 1, caractérisé en ce que l'alcali est utilisé selon une quantité située entre 0,5 et 2 pour cent en poids, calculée sur la base de la quantité de liant présente.

3. Procédé selon l'une quelconque des revendications 1-2, caractérisé en ce que de l'oxyde de magnésium et, le cas échéant, d'autres oxydes, tels que l'oxyde de titane et l'oxyde de zirconium est/sont présent(s) selon une quantité située entre 1 et 10 pour cent en poids, calculée sur la base de la quantité de liant présente, et en ce que des phosphates sont présents selon une quantité située entre 1 et 20 pour cent en poids, calculée sur la base de la quantité de liant présente.

4. Procédé selon l'une quelconque des revendications 1 à 3, caractérisé par l'addition d'oxyde de calcium selon une quantité située entre 0,3 et 3 pour cent en poids, calculée sur la base de la quantité de liant présente.

5. Procédé selon l'une quelconque des revendications 1 à 4, caractérisé par l'addition de ciment portland selon une quantité située entre 15 et 30 pour cent en poids, calculée sur la base de la quantité de liant présente.

6. Procédé selon l'une quelconque des revendications 1 à 4, caractérisé par l'addition de ciment portland selon une quantité d'environ 20 pour cent en poids, calculée sur la base de la quantité de liant présente.

7. Procédé selon l'une quelconque des revendications 1 à 6, caractérisé par l'addition de la poudre de silice amorphe aux liants selon une quantité située entre 4 et 20 pour cent en poids, calculée sur la base de la quantité de liant présente.

8. Procédé selon l'une quelconque des revendications 1 à 7, caractérisé en ce que le laitier a été broyé pour présenter une finesse d'environ 5000 Blaine, ou plus.

9. Procédé selon l'une quelconque des revendications 1 à 8, caractérise par l'addition au liant d'un agent tensioactif et/ou d'un plastifiant et/ou de qypse.

10. Procédé selon l'une quelconque des revendications 1 à 9, caractérisé en ce que le laitier a été broyé pour présenter une finesse d'environ 7500 Blaine.

11. Procédé de fabrication de matériaux de construction en convertissant un laitier de haut-fourneau amorphe broyé, sous forme de granulés, à hydraulicité latente, en liant hydraulique à action directe, par activation améliorée selon l'une quelconque des revendications 1 à 10, caractérisé par le fait de mélanger le laitier, l'activateur et tous les agents d'activation avec de l'eau et un granulat, tel que du sable et/ou du gravier, de façon classique, afin de former un béton de résistance mécanique élevée, de résistance chimique élevée et présentant une résistance au feu allant jusqu'à 1000°C.

12. Procédé selon la revendication 11, caractérisé par le fait d'ajouter également des libres d'acier, des fibres de verre, des fibres minérales ou des fibres plastiques ou un agent porogène ou un granulat léger au mélange de béton.